# EUROPÄISCHE PATENTSCHRIFT

(11) **EP 2 061 091 B1**
(45) Veröffentlichungstag und Bekanntmachung des Hinweises auf die Patenterteilung: **11.01.2012**
(21) Anmeldenummer: 07120672.6
(22) Anmeldetag: 14.11.2007
(51) Int. Cl.: H01L 31/048, E04B 1/94, E04D 13/18, E04D 3/35, E04C 2/296, B29C 44/12

(54) **Dach- oder Fassadenplatte mit Solarpanel**
Roof or facade section with solar panel
Plaque de toit ou de façade avec panneaux solaires

(43) Veröffentlichungstag der Anmeldung: 20.05.2009
(73) Patentinhaber: Luxin (Green Planet) AG, 6004 Luzern (CH)
(72) Erfinder: Burkhardt, Holger, 79761 Waldshut-Tiengen (DE); Glanzmann, Arthur, 6004 Luzern (CH)
(74) Vertreter: Rupp, Christian

(56) Entgegenhaltungen:
- WO-A-99/10934
- DE-A1- 10 037 757
- US-A- 5 164 020

## Beschreibung

Die vorliegende Erfindung bezieht sich auf eine Dach-oder Fassadenplatte aufweisend eine Oberflächenplatte mit einer Tragschicht aus aufgeschäumtem Kunststoff direkt verschäumt ist sowie ein Verfahren zu deren Herstellung und ein die Dach- oder Fassadenplatte aufweisendes Konstruktionselement.

Nach dem Stand der Technik werden für Fassadenplatten meist relativ dicke Platten, beispielsweise aus Granit, Marmor, Stein, Stahl, Metall, gefertigt. Eine ausreichende Dicke dieser Platten ist insofern erforderlich, da in diese Platten mittels aufwendigem Verfahren Bohrungen gefertigt werden und in diesen Bohrungen in weiterer Folge die Befestigungselemente zum Befestigen der Platten am Gebäude angeordnet werden.

Da eine ausreichende Dicke der Fassadenplatten unerlässlich ist, weisen bekannte Fassadenplatten hohe Gewichte pro Quadratmeter auf. Bekannte Fassadenplatten haben daher auch nur kleine Formate, da sonst ein Transport und vor allem das Anbringen am Gebäude, also die Montage, zu schwierig und aufwendig wären.

Das Anbohren der Fassadenplatten zur Anbringung der Befestigungselemente ist außerdem mit einem erheblichen Risiko verbunden, da bei Unachtsamkeit die Platte leicht zerbrechen kann.

Aus dem Stand der Technik sind auch Fassadenplatten und Bodenplatten bekannt, bei denen eine Oberflächenschicht mit einer Tragschicht direkt verschäumt ist. Diese Oberflächenschicht ist dabei aus Granit, Marmor, Stein, Keramik oder Metall und soll die Außenfassade des Gebäudes bzw. einen Bodenbelag darstellen.

Dachplatten mit einer an einer Tragschicht direkt verschäumten Oberflächenschicht sind indes aus dem Stand der Technik nicht bekannt.

Weiterhin ist es gemäß dem Stand der Technik möglich, nachträglich Solar- bzw. Photovoltaikpanele an einem Gebäude zu befestigen.

Unter Solar- bzw. Photovoltaikpanelen wird im Weiteren ein Solarmodul, ein Photovoltaikmodul bzw. ein Solargenerator verstanden. Diese wandeln Licht der Sonne direkt in elektrische Energie um. Ein Solarpanel bzw. -modul weist im Wesentlichen, beginnend auf der zur Sonne gewandten Seite, auf: eine Glasscheibe, eine transparente Kunststoffschicht, in die mono- oder polykristalline Solarzellen eingebettet sind, wobei die Solarzellen durch sogenannte Lötbändchen elektrisch miteinander verschaltet sind, eine Rückseitenkaschierung, welche witterungsfesten Kunststoffverbundfolie, Anschlussdose und Anschlussterminal aufweist sowie einen (Aluminiumprofil-)Rahmen. Entscheidend für ein Solarpanel sind vor allem eine transparente, strahlungs- und witterungsbeständige Abdeckung, ein Schutz der Solarzelle vor mechanischen Einflüssen, Schutz der Bauteile, insbesondere der Solarzellen und elektrischen Verbindungen vor Feuchtigkeit, daher-auch robuste elektrische Anschlüsse, ein ausreichender Berührungsschutz der elektrisch leitenden Bauteile, außerdem eine ausreichende Kühlung der Solarzellen sowie Handhabungs-und Befestigungsmöglichkeiten.

Insbesondere die Kühlung von Solarmodulen ist ein entscheidender Faktor für eine hohe und konstante Leistungsfähigkeit. Beispielsweise beim Einsatz von Solarmodulen in besonders heißen Gegenden können auf den Solarmodulen Oberflächentemperaturen von über 400°C auftreten, was zu einem Leistungsabfall von über 40% führen kann. Das Kühlen von Solarmodulen kann also einen erheblichen Einfluss auf dessen Effizienz haben. Dabei ist allerdings nicht nur das Kühlen an sich entscheidend, sondern vor allem auch das Konstanthalten der Temperatur, um eine wirklich effiziente Nutzung des Moduls zu erzielen.

Die Solarzellen sind heutzutage meist aus Halbleitermaterialien, überwiegend aus Silizium hergestellt. Wie bereits erwähnt, werden diese Halbleitersolarzellen zur Energiegewinnung zu großen Solarmodulen verschaltet. Zur elektrischen Verschaltung sind die Zellen mit Leiterbahnen, also den zuvor genannten Lötbändchen an Vorder- und Rückseite (sogenannter Front- und Rückseitenkontakt) in Reihe geschaltet, wodurch sich die Spannung der Einzelzellen addiert und dünnere Drähte als bei einer Parallelschaltung verwendet werden können.

Um nun gemäß dem genannten Stand der Technik des Weiteren Solar- bzw. Photovoltaikpanele an einem Gebäude zu befestigen, werden diese hierzu nachträglich in bekannter Weise an der Fassade bzw. den Fassadenplatten oder auf dem Dach bzw. den Dachplatten angebracht. Hierzu sind an den Solarpanelen zusätzlich Befestigungselemente angebracht, um diese mit der Fassade bzw. dem Dach eines Gebäudes verbinden zu können. Dies erfordert einen zusätzlichen Arbeitsaufwand und führt folglich auch zu höheren Kosten. Außerdem ist die Gefahr einer Beschädigung der Solarpanele durch das bzw. bei dem Anbringen gesonderter Befestigungselementen erhöht. Ferner müssen die elektrischen Verbindungen sicher vor Feuchtigkeit und auch Berührungen geschützt sein. Außerdem muss eine zusätzliche, ausreichende Kühlung an dem Solarpanel angebracht sein.
Druckschrift DE 100 37 757 A1 zeigt ein Verkleidungselement zur äußeren Abdeckung eines Dachs oder einer Außenwand eines Gebäudes. Das Verkleidungselement ist mehrschichtig aufgebaut und weist zur akustischen und thermischen Dämmung eine Dämmplatte auf. Auf der Innenseite der Dämmplatte ist eine Sichtfläche aufkaschiert. Auf der Außenseite der Dämmplatte ist ein Dichtungselement und darauf ein Solarmodul befestigt.
Druhochüft EP-A-0325369 zeigt ein Solomodul mit Verste fumgsselementer im Rohmen.
Druckschrift WO 99/10934 zeigt eine Photovoltaik-Vorrichtung, die eine Isolierschicht aufweist, in der Röhren oder Leitungen angeordnet sind, die einen Einlass und einen Auslass für Wasser aufweisen.
Druckschrift US 5,164,020 zeigt eine Dachplatte zur Montage auf einem Dach. Zur Herstellung einer solchen Dachplatte wird ein Solarmodul in einen Formkörper zum Formen eines Basissubstrats eingebracht, welches das Solarmodul umgibt und stützt. Das Solarmodul wird dabei zur Bildung des Basissubstrats mittels Reaction Injection Moulding (RIM) umschäumt.

Ziel der vorliegenden Erfindung ist daher eine neue Dach- oder Fassadenplatte mit Solarpanel, die einfach und sicher in der Herstellung und Montage ist.

Erfindungsgemäß wird dies durch die Merkmale der unabhängigen Ansprüche geschützt. Die abhängigen Ansprüche bilden den zentralen Gedanken der Erfindung in besonders vorteilhafter Weise weiter.

Gemäß der Erfindung weist die Dach- oder Fassadenplatte mindestens eine Oberflächenplatte auf, welche an Gebäuden befestigbar ist. Die Oberflächenplatte ist mit einer Tragschicht aus aufgeschäumtem Kunststoff direkt verschäumt. Die Oberflächenplatte weist ein Solarpanel auf. In der Tragschicht ist ein Metallgitter eingeschäumt.

Vorteilhafterweise ist die Tragschicht an ihrer der Oberflächenplatte gegenüberliegenden Seite mit einer Unterschicht verschäumt, wobei die Unterschicht vorzugsweise aus einem brandhemmenden Material, beispielsweise Calciumsulfat gebildet ist.

Die Tragschicht ist vorteilhafterweise ein aufgeschäumter Polyurethan Hart- bzw. Hartintegralschaum.

In einer besonders vorteilhaften Weise sind in der Tragschicht Aufhängungs- bzw. Montagemittel zum Befestigen der Dach- oder Fassadenplatte am Gebäude, Nut/Federelemente, Rohre, elektronische Bauteile und/oder sonstige Bauteile oder Elemente eingeschäumt.

Die Rohre sind vorzugsweise mit dem Rohrsystem einer Heizung, beispielsweise einer Fußbodenheizung, und/oder einer Warmwasseraufbereitung entweder direkt oder indirekt über Wärmetauscher verbunden sind.

In einer besonders bevorzugten Ausführungsform weisen die Rohre Kühlschlangen auf.

Ferner ist ein bevorzugtes Verfahren zur Herstellung der Dach- oder Fassadenplatten gemäß der Erfindung beschrieben.

In einer besonders bevorzugten Ausführungsform ist in den Ansprüchen 14 bis 18 eine spezielle Anwendung der Dach-oder Fassadenplatten als Konstruktionselement, also als Auβenschale bzw. Dachabdeckung eines Gebäudes beschrieben.

Die hier beschrieben Dach- oder Fassadenplatte gemäß der Erfindung weist mindestens eine Oberflächenplatte auf, die mit einer Tragschicht aus aufgeschäumtem Kunststoff direkt verschäumt ist, wobei die Oberflächenplatte ein Solarpanel aufweist. Das Solarpanel kann somit direkt als vollständige Dach- oder Fassadenplatte an einem Gebäude angebracht werden. Dadurch wird das nachträgliche Anbringen von Solarpanelen an der Fassade bzw. auf dem Dach eines Gebäudes vermieden, da sie direkt in die Dach- bzw. Fassadeplatte integriert sind. Somit sind Dach/Fassadenplatte, Isolierung und Solarzelle in einem einzigen Bauteil vereint. Diese Integration des Solarpanels verringert daher die Montagezeit erheblich. Die Dach- bzw. Fassadenplatte kann somit direkt an Strukturelementen eines Gebäudes angebracht werden, wie beispielsweise direkt auf die Dachlatten aufgelegt bzw. an weiteren Teilen einer statischen Baukonstruktion eines Gebäudes, wie beispielsweise Trägern oder Stahlbetonsäulen, befestigt werden. Hierdurch kann beispielsweise auch das zusätzliche Decken eines Daches bspw. mit Dachziegeln oder das Errichten einer Außenfassade eingespart werden, da die Platte als vollwertiges Dach- bzw. Fassadenelement eingesetzt werden kann. Es kann also die gesamte Unterkonstruktion eines Daches bzw. einer Fassade eingespart werden.

Da die Platten eine besonders ebene Oberfläche ohne wesentliche Angriffsfläche, beispielsweise gegenüber Wind haben, sind die erfindungsgemäßen Dach- oder Fassadenplatten sehr viel weniger anfällig gegenüber derartigen Umwelteinflüssen im Vergleich zu mit Ziegeln oder ähnlichem gedeckten Dächern oder nachträglich an Dach oder Fassade angebrachten Solarpanelen. Beispielsweise bei Sturm sind somit die Gefahr einer Beschädigung der Dach- oder Fassadenkonstruktion und auch die Gefahr für Passanten aufgrund herabfallender Dach-oder Fassadenelemente (bspw. Ziegel) deutlich verringert.

Ferner ist die erfindungsgemäße Platte sehr dünn und leicht im Vergleich zu einem Dach bzw. einer Fassade mit nachträglich aufgebrachtem Solarpanel, wodurch ferner eine hohe Gewichtsersparnis gegenüber einem herkömmlichen Dach bzw. Fassade erreicht werden kann.

Zusätzlich ist es auf einfache Art und Weise möglich, unterschiedliche Oberflächenplatten zu einem größeren Dach-oder Fassadenelement zusammenzuschäumen, wodurch zusätzlicher Montageaufwand durch Ausrichtung der Oberflächenplatten auf dem Dach bzw. an der Fassade vermieden wird. Der gesamte Montageaufwand verringert sich somit um ein Vielfaches des herkömmlichen Montageaufwandes für Dächer oder Fassaden.

Durch das rückseitige Einschäumen des Solarpanels wird des Weiteren gleichzeitig ein Schutz der Solarzellen-Rückseite vor mechanischen Einflüssen und ein Schutz der Rückseitenkontakte vor Feuchtigkeit erzielt. Ferner müssen die elektrischen Anschlüsse, sofern sie mit in die Tragschicht eingebettet sind, weniger robust ausgelegt werden. Ebenso liegt aufgrund der Tragschicht auch gleichzeitig ein ausreichender, rückseitiger Berührungsschutz der elektrisch leitenden Bauteile vor, sodass an dieser Stelle auf einen weiteren Schutz verzichtet werden kann.

Beispielsweise bei einer Altbausanierung können so in einem einzigen Zug die Isolierung des Daches bzw. der Fassade verbessert und gleichzeitig Solarzellen bzw. Solarmodule einfach ausgelegt und aufgebracht werden.

In die Tragschicht sind auch Metallgitter mit eingeschäumt, welche die Festigkeit der Tragschicht erhöhen und zudem als Stärkung der Tragschicht bei besonders schweren Dach- oder Fassadenplatten dienen können.

Die Tragschicht ist des Weiteren an ihrer der Oberflächenplatte gegenüberliegenden Seite vorzugsweise mit einer Unterschicht verschäumt. Durch diese zusätzliche Schicht kann das Dach- oder Fassadenelement weitere Erfordernisse erfüllen, wie beispielsweise bestimmte Brandschutzerfordernisse. Hierzu ist die Unterschicht in besonders vorteilhafter Weise als Calciumsulfatplatte ausgebildet, welches besonders brandhemmend wirkt. Auch andere brandhemmenden Materialien sind denkbar.

Ferner ist vorzugsweise Polyurethan Hart- bzw. Hartintegralschaum als aufschäumbarer Kunststoff vorgeschlagen. Dieser Kunststoff zeichnet sich vor allem durch seine große Festigkeit im aufgeschäumten Bereich, seine guten Wärmedämmeigenschaften und sein schnelles Verbindungs- und Aushärtvermögen aus. Ferner ist dieser Schaum wasserdicht, weshalb die Solarzellen und die elektrischen Kontakte wenigstens auf der Rückseite des Solarpanels nicht zusätzlich, beispielsweise durch eine weitere Schutzschicht, vor Feuchtigkeit geschützt werden müssen. Das Eindringen von Wasser, beispielsweise Regenwasser, kann auf diese Weise einfach verhindert werden. Aufgrund ihres geringen delta Ts kann ebenso eine Kondensierung, beispielsweise von Wasser, in dem System verhindert werden, so dass wirkungsvoll die Bildung von Schimmel oder Moos vermieden werden kann, die beispielsweise bei nachträglich aufgebrachten Solarpanelen auf Dach oder an Fassade auftreten.

In der Tragschicht sind vorzugsweise Aufhängungs- bzw. Montagemittel zum Befestigen der Dach- oder Fassadenplatte am Gebäude, Nut/Federelemente, Rohre, elektronische Bauteile und/oder sonstige Bauteile eingeschäumt.

Durch das Einbringen von Befestigungselementen, wie beispielsweise Haken, Gewinde, etc., mittels eines einzigen vollautomatischen Verfahrens während des Schäumens in die Schaumstruktur entsteht nach Aushärten des Schaums eine hochfeste kraftvolle Verbindung, welche die Oberflächenplatte mit dem aufgeschäumten Kunststoff verbindet und gleichzeitig die Befestigungselemente aufnimmt. Die empfindlichen Solarpanele als Oberflächenplatten mit ihren spröden Solarzellen brauchen daher nicht mit zusätzlichen Halteelementen oder Bohrlöchern zu deren Befestigung versehen oder gar selbst bzw. ihr Rahmen angebohrt zu werden, da die Befestigungselemente bereits in der Tragschicht verankert sind. Sämtliche Kräfte, die auf die Dach- oder Fassadenplatte wirken, werden somit in die Tragschicht verlegt. Die Gefahr der Beschädigung oder des Bruches eines Solarpanels ist somit minimiert und die an den Solarpanelen üblicherweise direkt angebrachten Handhabungs- und Befestigungsmöglichkeiten können entfallen.

Durch die Verwendung von Polyurethanschaum als Tragschicht kann diese gleich als Wärmedämmung verwendet werden. Die Tragschicht dient daher nicht nur zur kraftschlüssigen Bruchverhinderung des Solarpanels sondern auch zur Aufnahme der Befestigungselemente sowie auch als Isolation vor Hitze und Kälte.

Vorteilhafterweise werden in die Tragschicht Nut/Federelemente mit eingeschäumt, welche das Verlegen der Dach- oder Fassadenplatte erleichtern und einen stabilen Zusammenhalt der Platten sichern kann.

Ebenfalls werden in einer besonders bevorzugten Ausführungsform Rohre in die Tragschicht mit eingeschäumt. Die Rohre weisen dabei in einer besonders bevorzugten Ausführungsform Kühlschlangen oder Kühlmittelschlangen auf. Auf diese Weise ist die für Solarzellen notwendige, ausreichende Kühlungsvorrichtung direkt und einfach in der Tragschicht integriert und muss nicht zusätzlich integriert oder angebracht werden. Durch den integrierten Wärmeabtransport kann somit die Effizienz des Solarpanels noch deutlich gesteigert werden.

Das in den Kühlschlangen zirkulierende Wärmeträgermittel kann ferner vorzugsweise über einen angeschlossenen Wärmetauscher beispielsweise zur Warmwasseraufbereitung genutzt werden. Die Kühlschlangen können für diesen Zweck direkt mit einer Warmwasseraufbereitungsanlage oder einer Heizungsanlage verbunden werden.

Es ist auch denkbar, das alternativ oder zusätzlich das aufgewärmte Kühlmittelfluid via Turbinen ferner zur Erzeugung von Strom genutzt wird, wodurch der Wirkungsgrad der Solarpanele noch erhöht werden kann. Das Kühlung der Solarpanele kann somit vielfältig zum Heizen, für die Warmwasseraufbereitung oder auch zum Erzeugen von Strom verwendet werden.

Ganz allgemein gesprochen ist es möglich, verschiedenste Bauteile und Elemente in die Tragschicht mit einzuschäumen. Dies schließt vor allem auch elektronische Bauteile jeglicher Art ein, da diese aufgrund ihrer geringen Größe sehr leicht in Aufschäumformen eingebracht werden können.

Das Verfahren gemäß der Ansprüche 12 und 13 zeichnet sich insbesondere dadurch aus, dass es vollkommen unempfindlich gegen unterschiedliche Dicken der Solarpanele ist. Selbst wenn ein Solarpanel abschnittsweise ungleiche Dicken, beispielsweise an den Verbindungsstellen einzelner Solarzellen oder an den Rückseitenkontakten einer Solarzelle, aufweist, weisen die mittels dem erfindungsgemäßen Verfahren hergestellten Dach- oder Fassadenplatten stets eine konstante Gesamtdicke auf, da die Dicke des Polyurethan Hart- bzw. Hartintegralschaums variieren kann. Dach- oder Fassadenelemente, die zu einem Dach bzw. einer Fassade eines Gebäudes gehören, können dadurch alle mit einer absolut identischen Dicke gefertigt werden.

Weitere Merkmale, Vorteile und Eigenschaften der Erfindung sollen nunmehr anhand von Ausführungsbeispielen und der Figuren der begleitenden Zeichnungen erläutert werden.

- Figur 1: zeigt ein erfindungsgemäßes Dach- oder Fassaden- element
- Figur 2: zeigt ein erfindungsgemäßes Konstruktionselement mit eingeschäumten Kühlschlangen.

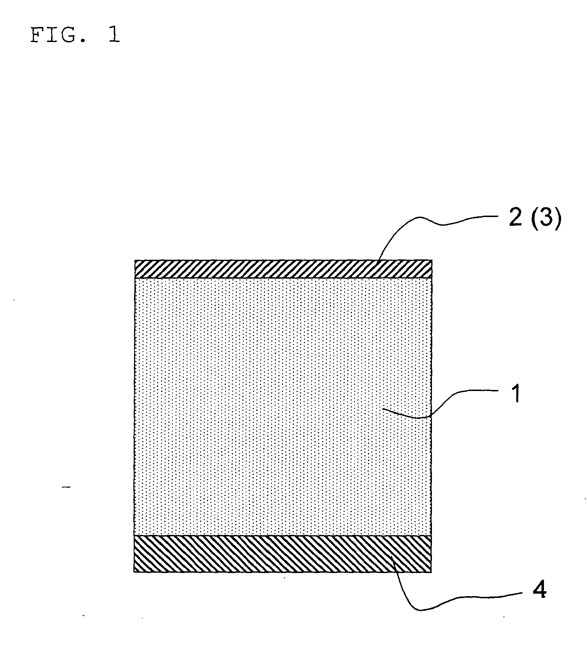

Figur 1 zeigt ein erfindungsgemäßes Dach- oder Fassadenelement aufweisend wenigstens eine mit einer Tragschicht 1 direkt verschäumte Oberflächenplatte 2. Die Oberflächenplatte 2 weist ein Solarpanel 3 auf.

Durch das Verschäumen eines Solarpanels 3 mit einer Tragschicht 1 als Dach- oder Fassadenplatte muss das Solarpanel nicht zusätzlich auf das Dach bzw. die Fassade eines Gebäudes montiert werden. Somit muss das Solarmodul selbst nicht mehr mit eigenen Handhabungs- und Befestigungsmöglichkeiten ausgestattet werden. Des Weiteren wird gleichzeitig wenigstens ein Schutz der Solarzellen-Rückseite vor mechanischen Einflüssen und ein Schutz wenigstens der Rückseitenkontakte vor Feuchtigkeit und anderen Einflüssen erzielt. Außerdem können die elektrischen Anschlüsse, sofern sie mit in die Tragschicht eingebettet sind, weniger robust ausgelegt sein. Da die elektrisch leitenden Bauteile wenigstens auf der Rückseite des Solarmoduls in die Tragschicht mit eingeschäumt sind, liegt dort auch gleichzeitig ein ausreichender Berührungsschutz vor, sodass an diesen Stellen auf einen weitergehenden Schutz verzichtet werden kann.

Die elektrischen Verbindungen der Solarpanele 3 zum Abführen des gewonnenen Stromes können bereits beim Einschäumen aus der aufgeschäumten Kunststoffmasse herausgeführt werden, sodass der Strom einfach von den Solarmodulen abgeführt und beispielsweise gespeichert oder direkt von Verbrauchern genutzt werden kann. Vorzugsweise werden Anschlussdose mit Diode und/oder das Anschlussterminal des Solarpanels 3 derart angeordnet und eingeschäumt, dass diese von der Innenseite der Dach- oder Fassadenplatte zugänglich sind. Somit sind die Anschlüsse des Solarpanels 3 einfach zugänglich und auf der Innenseite der Platte sicher vor der Witterung geschützt.

Es ist auch denkbar, dass die Anschlussdose bzw. das Anschlussterminal zusätzlich oder alternativ nach dem Einschäumen an wenigstens einer Seite, an der die Dach- oder Fassadenplatte mit einer weiteren verbunden werden soll, zugänglich sind. Vorzugsweise sind diese Anschlusselemente als Steckverbindung ausgelegt. Es ist somit möglich, mehrere Solarpanele auf mehreren Dach- oder Fassadenplatten einfach und direkt beim Anbringen der Dach- oder Fassadenplatte in Reihe zu schalten, wodurch eine Montage der Platten weiter vereinfacht wird.

Die Tragschicht 1 ist ein aufgeschäumter Kunststoff, vorteilhafterweise ein aufgeschäumter Polyurethan Hart- bzw. Hartintegralschaum. Dieser Kunststoff zeichnet sich insbesondere durch seine hohe Festigkeit, seine guten Wärmedämmeigenschaften und sein schnelles Verbindungs- und Aushärtvermögen aus. Die Tragschicht 1 dient daher sowohl der kraftschlüssigen Bruchverhinderung des Solarpanels 3 als auch der Wärmedämmung, also als Isolation vor Hitze und Kälte. Ferner ist der Polyurethan Hart- bzw. Hartintegralschaum wasserdicht, sodass die Solarzellen und die elektrischen Kontakte wenigstens auf der Rückseite des Solarpanels 3 nicht zusätzlich, beispielsweise durch eine weitere Schutzschicht, vor Feuchtigkeit geschützt werden müssen. Ebenso wird eine Kondensierung in dem System aufgrund des geringen delta Ts verhindert, so dass wirkungsvoll die Bildung von Schimmel oder Moos vermieden werden kann. Es ist überdies auch denkbar, dass andere aufschäumbare Stoffe als Tragschicht Verwendung finden.

In der Tragschicht 1 ist ferner ein Metallgitter 8 eingeschäumt. Vorzugsweise sind in der Tragschicht 1 ferner weitere Bauteile oder Elemente eingeschäumt. Dieses können beispielsweise Aufhängungs- bzw. Montagemittel zum Befestigen der Dach- oder Fassadenplatte am Gebäude, Nut/Federelemente, Rohre, elektronische Bauteile und/oder sonstige Bauteile oder Elemente sein. Neben ihren Eigenschaften zur Bruchverhinderung und Wärmedämmung dient die Trägerschicht somit auch zur Aufnahme von Bauteilen und Elementen.

Durch das Einschäumen von Metallgittern, bspw. Stahlgitterroste wie etwa Baustahlgitter, in die Tragschicht 1 der Dach- oder Fassadenelement kann die Festigkeit der Tragschicht 1 erhöht werden. Bei besonders schweren Dach- oder Fassadenplatten kann ein solches Metallgitter daher auch als Stärkung der Tragschicht 1 dienen.

In einer bevorzugten Ausführungsform sind beispielsweise Nut/Federelemente in die Trägerschicht mit eingeschäumt. Vorzugsweise werden hierzu Drahtgitter oder Gitterrohre aus HPL (High Pressure Laminat) Materialienstreifen als Nut/Federelemente mit eingeschäumt, welche mit Löchern ausgestattet sind, um eine kraftschlüssige Verbindung mit dem (Polyurethan-)Schaum der Tragschicht 1 zu erzielen. Das Drahtgitter oder der HPL-Rost dient dann dazu, die Belastbarkeit der Dach- oder Fassadenplatte zu erhöhen. Das Nut/Federelement erleichtert das Verlegen der Dach- oder Fassadenplatte und sichert einen stabilen Zusammenhalt miteinander verbundener Platten.

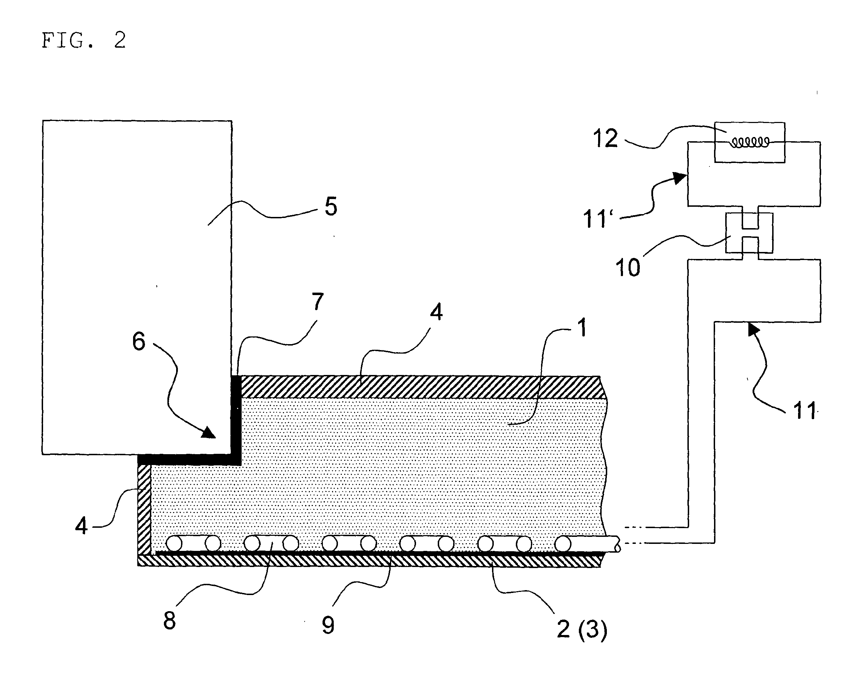

In die Tragschicht 1 vorzugsweise eingeschäumte Rohre weisen vorzugsweise Kühlschlangen bzw. Kühlmittelschlangen 8 auf, wie in Figur 2 gezeigt. Die in die Tragschicht 1 mit eingeschäumten Kühlschlangen 8 werden im montierten Zustand der Dach- oder Fassadenplatten vorzugsweise von einem Wärmeträgermedium durchströmt. Auf diese Weise ist die für Solarzellen notwendige, ausreichende Kühlung direkt und einfach in der Tragschicht integriert. Auf eine zusätzliche Anbringung einer Kühlung kann somit verzichtet werden, was sowohl die Montage erleichtert als auch zu Kosten- und Materialeinsparungen führt. In einer bevorzugten Ausführungsform sind die Kühlschlangen 8 auf einer Wärmeleitplatte 9, vorzugsweise aus einem gut wärmeleitenden Material, angebracht, vorzugsweise angeschweißt. Die Wärmeleitplatte 9 ist wiederum vorzugsweise rückseitig an dem Solarpanel 3 angeordnet bzw. angebracht und sorgt somit für eine gleichmäßige Wärmeverteilung der vom Solarpanel 3 abgegebenen Wärme. Die Wärme kann dann einfach von dem Solarpanel 3 über die Wärmeleitplatte 9 auf die Kühlschlangen 8 und somit auf das Wärmeträgermedium in den Kuhlschlangen 8 übertragen und abgeführt werden.

Die von den Dach- oder Fassadenplatten über das Solarpanel 3 auf das Wärmeträgermedium in den Kühlschlangen 8 übertragene Wärme kann überdies direkt oder indirekt vorzugsweise über Wärmetauscher 10 in bzw. an den Kreislauf 11, 11' einer (Fußboden-)Heizung 12 oder in bzw. an den Wasserkreislauf zur Warmwasseraufbereitung (nicht dargestellt) übertragen werden. In Figur 2 ist beispielhaft eine indirekte Wärmeübertragung mittels Wärmetauscher 10 dargestellt, wobei der Kreislauf 11 den Kühlmedienkreislauf des Solarpanels 3, und der Kreislauf 11' den Nutzkreislauf, hier den Heizungskreislauf darstellt. Die Kreisläufe 11, 11' sind lediglich schematisch dargestellt. Die gestrichelten Linien sollen hierbei andeuten, dass die Kühlschlangen 8 in den Kühlmedienkreislauf 11 integriert sind.

Die Kühlschlangen 8 sorgen somit für eine verbesserte Wärmeabfuhr durch die Dach- oder Fassaden-Sandwichplatten, wodurch einerseits der Wirkungsgrad der Solarzellen erhöht wird. Unterschiedliche Ausdehnungen durch entstehende Spannungen der Solar- bzw. Photovoltaikpanele 3 aufgrund von Temperaturhüben können andererseits auf diese Weise sicher verringert werden. Zudem kann das erwärmte Kühlmedium aus den Kühlschlangen 8 ferner zur Warmwasseraufbereitung oder für Wärmetauscher weiterverwendet werden.

Das nach dem Kühlvorgang aufgewärmte Kühlmittelfluid kann via Turbinen ebenfalls zur Erzeugung von Strom genutzt werden. Hierdurch kann der Wirkungsgrad der Solarpanele noch deutlich erhöht werden. Die Kühlanordnung der Solarpanele 3 kann somit noch vielfältig anderweitig genutzt werden, beispielsweise zum Heizen, für die Warmwasseraufbereitung oder auch zum Erzeugen von weiterem Strom.

Um das Kühlsystem bzw. dessen Anschluss zu vereinfachen, können die Kühlschlangen 8 derart in die Tragschicht 1 eingeschäumt sein, dass wenigstens jeweils ein Ende der Kühlschlangen 8 so angeordnet ist, dass es bis an den Rand der Dach- bzw. Fassadenplatte führt und von außen zugänglich ist. Vorzugsweise sind dabei die Enden der Kühlschlangen 8 zu wenigstens einer Seite der Dach- oder Fassadenplatte, an der diese mit einer weiteren verbunden werden soll, geführt, so dass die Kühlschlangen 8 einer Dach- oder Fassadenplatte beim Montieren einfach mit denen einer weiteren Platte verbunden werden können. Hierzu sind die Rohre bzw. Kühlschlangen 8 an den entsprechenden Verbindungsstellen vorzugsweise mit Verbindungselementen, wie beispielsweise Schraub- oder Steckänschlüssen, verbunden, um die Montage von mit Solarpanelen 3 versehenen Dach- oder Fassadenplatten mit integriertem Kühlsystem noch deutlich zu vereinfachen.

Des Weiteren können auch beliebig andere Bauteile und Elemente in die Tragschicht 1 mit eingeschäumt werden. In einer besonders vorteilhaften Ausführungsform werden elektronische Bauteile in die Tragschicht 1 mit eingeschäumt. Die Anschlussleitungen können dabei schon beim Einschäumen aus der aufgeschäumten Kunststoffmasse herausgeführt werden, sodass ein Anschluss dieser Bauteile nach der Herstellung der jeweiligen Platte einfach durchgeführt werden kann. Es ist auch möglich, entsprechende Anschlusselemente in der Tragschicht 1 vorzusehen, die dann, wie die des Solarpanels 3, beispielsweise von der Innenseite der Dach- oder Fassadenplatte einfach zugänglich sind.

An elektronischen Bauteilen sind insbesondere in der Haustechnik unterschiedlichste Möglichkeiten gegeben. So können beispielweise Licht- oder Temperaturfühler mit eingeschäumt werden, die automatisch Vorhänge, Jalousien, Klimaanlage oder Heizung steuern. Da der Polyurethan-Hartschaum überdies wasserdicht ist, brauchen diese Sensoren nicht zusätzlich gegen Nässe geschützt zu werden.

Auch ist es möglich, Funkantennen, beispielsweise für kabellose Netzwerke und kabellosen Internetzugang aber auch für Mobiltelefonie in die aufgeschäumte Kunststoffschicht 1 zu integrieren. Die Funkantennen wären dann im Dach bzw. in der Hausfassade integriert und würden das Dach bzw. die Fassade optisch nicht stören. Ferner kann der Strom der Solarpanele direkt für die im Träger integrierten Bauteile genutzt werden, um somit beispielsweise die Empfangs- oder Sendestärke bzw. -qualität zu verbessern.

Die Tragschicht 1 ist ferner vorzugsweise an ihrer der Oberflächenplatte 2 bzw. dem Solarpanel 3 gegenüberliegenden Seite mit einer Unterschicht 4 verschäumt. Diese Unterschicht 4 dient beispielsweise optischen Zwecken oder anderen bestimmten Erfordernissen, wie vorzugsweise Brandschutzerfordernisse. Die Unterschicht 4 ist vorzugsweise als Calciumsulfatplatte ausgebildet, die besonders brandhemmende Eigenschaften aufweist. Es sind jedoch auch andere Schichtmaterialien mit vorteilhaften Eigenschaften für Dach- oder Fassadenplatten denkbar.

In einer weiteren Ausführungsform kann die Schicht 4 darüber hinaus beispielsweise auch an wenigstens einer der seitlichen Außenbereichen der Trägerschicht 1 mit dieser verschäumt sein, um auch an dieser Bereichen ihre Eigenschaften zur Geltung kommen zu lassen (vgl. Fig. 2). Besonders vorzugsweise ist an jeder Seite der Trägerschicht 1 mit Ausnahme der Vorderseite eine Platte, vorzugsweise eine Calciumsulfatplatte angeordnet.

Um etwaige elektrische Verbindungen bzw. Anschlusselemente durch die Unterschicht 4 zu führen bzw, zugänglich zu machen, können in die Unterschicht 4 an definierten Positionen Zugänge, beispielsweise in Form von Löchern, vorgesehen sein. Diese sind vorzugsweise mit einem Deckel beispielsweise mittels einer einfacher Schraub- oder Steckverbindung wahlweise verschließbar. Der Deckel ist vorzugsweise aus demselben Material, wie die Unterschicht 4.

Durch die Integration des Solarpanels 3 in die Dach-oder Fassadenplatte kann das Solarpanel 3 auf diese Weise direkt als vollwertige Dach- oder Fassadenplatte an einem Gebäude angebracht werden, was das nachträgliche Anbringen von Solarpanelen 3 auf dem Dach bzw. an der Fassade eines Gebäudes überflüssig macht. Somit kann eine Dach/Fassadenplatte mit Isolierung und Solarzelle und gegebenenfalls weiteren Eigenschaften, wie bspw. Brandschutzeigenschaften, in einem einzigen Bauteil vereint werden. Es ist daher möglich, die gesamte Unterkonstruktion eines Daches bzw. einer Fassade einzusparen, was sowohl die Herstellungskosten als auch die Montagezeit einer mit Solarzellen bestückten Dach- oder Fassadenkonstruktion erheblich verringert.

Die Solarpanele selbst können auch sehr viel einfacher und kostengünstiger gestaltet werden, da auf zusätzliche Schutzvorrichtungen, wie beispielsweise ein Schutz vor mechanischen Einflüssen, vor Feuchtigkeit und vor Berührung wenigstens auf der Rückseite des Solarpanels, und außerdem auf eine zusätzliche Kühlung sowie auf weitere Handhabungs-und Befestigungsmöglichkeiten an den Solarpanelen selbst verzichtet werden kann.

Die Eigenschaften und Funktionalität der erfindungsgemäßen Dach- oder Fassadenplatte können noch deutlich dadurch verbessert werden, indem weitere beliebige Bauteile und Elemente in die Trägerschicht 1 mit eingeschäumt werden können, um beispielsweise das Anbringen von Aufhängungs- und Montageelementen zu vereinfachen, die Wärmeabfuhr zu verbessern und die abgeführte Wärme zu nutzen oder elektrische Bauteile versteckt zu integrieren.

Im Folgenden wird ein Herstellungsverfahren einer erfindungsgemäßen Dach- oder Fassadenplatte beschrieben.

Die Oberflächenplatte 2, welche das Solarpanel 3 aufweist, wird zunächst in eine Form eingebracht, die dann geschlossen wird. Danach werden zwei flüssige Komponenten in die Form eingespritzt, die miteinander reagieren und aufschäumen. Nach dem Aufschäumen härtet der Kunststoff, vorzugsweise ein Polyurethan-Kunststoff, selbstständig aus. Die so entstehende Verbindung mit dem Solarpanel 3 zeichnet sich vor allem durch seine sehr hohe Festigkeit aus.

Das erfindungsgemäße Verfahren ermöglicht den Einsatz von Solarpanelen 3 mit Isolationsschicht als vollwertige Einheit für eine Dachabdeckung bzw. Fassade. Aufgrund ihrer geringen Dicke und ihres geringen Gewichts, da beispielsweise auf weitere Außenmaterialien wie Dachziegel oder Fassadenplatten gänzlich verzichtet werden kann, wird ein Großteil der Materialkosten, wie beispielsweise an teuren Oberflächenmaterialien, eingespart und die Montage erheblich erleichtert. Außerdem haben Unebenheiten in den Solarpanelen, beispielsweise an den Verbindungsstellen zwischen einzelnen Solarzellen oder an den Rückseitenkontakten einer Solarzelle, keinen Einfluss auf die fertige Dach- oder Fassadenplatte, da nach dem Verschäumen mit der Tragschicht 1 jede auf diese Art und Weise, vorzugsweise in der selben bzw. identischen Form hergestellte Dach- oder Fassadenplatte stets die eingestellte, gleiche, konstante Gesamtdicke aufweist. Variable Dicken eines Solarpanels 3 werden somit automatisch korrigiert, indem die Tragschicht 1 an den entsprechenden Stellen, bedingt durch die abschließende Form, dünner ausgebildet wird.

Durch die Positionierung von Befestigungselementen, wie beispielsweise Haken, Gewinden, etc., in der Form können diese in die Tragschicht 1 mit eingeschäumt werden. Durch das Einbringen von Befestigungselementen in die Schaumstruktur mittels eines einzigen vollautomatischen Verfahrens während des Schäumens entsteht nach Aushärten des Schaums eine hochfeste kraftvolle Verbindung, welche die Solarpanele 3 mit dem aufgeschäumten Kunststoff verbindet und gleichzeitig die Befestigungselemente aufnimmt. Die Oberflächenplatten 2 bzw. die Solarpanele 3 brauchen daher nicht mit zusätzlichen Halteelementen oder Bohrlöchern zu deren Befestigung versehen oder gar selbst bzw. ihr Rahmen angebohrt zu werden, da die Befestigungselemente bereits in der Tragschicht 1 verankert sind. Die Belastung des gesamten Dach- oder Fassadenelements erfolgt somit in der stabilen Tragschicht 1 und nicht in der Oberflächenplatte 2, also dem Solarpanel 3, wodurch die Gefahr der Beschädigung oder des Bruches eines Solarpanels 3 minimiert ist.

Die erfindungsgemäßen Dach- oder Fassadenplatten können einerseits als hinterlüftete Platten verwendet werden (Fig.1). Andererseits ist es jedoch vorzugsweise auch möglich, die Dach- oder Fassadenplatten direkt an vorhandene Dachlatten bzw. vorhandenes Mauerwerk zu befestigen. Somit können beispielsweise zur Altbausanierung oder bei Neubauten diese Platten als eigentliche Dachabdeckung bzw. Außenwand (Fig.2) und gleichzeitig als Folge davon natürlich auch als Isolierung und Innenwand bzw. Innendecke, also als sogenanntes Konstruktionselement dienen. In einem einzigen Zug werden somit die Isolierung des Daches bzw. der Fassade verbessert und gleichzeitig Solarzellen aufgebracht. Im Falle des Konstruktionselements ist die Tragschicht 1 wesentlich dicker ausgebildet (vorzugsweise ca. 100-200 mm Polyurethan Hart- oder Hartintegralschaum) als im Falle der Verwendung als hinterlüftete Dach- oder Fassadenplatten (vorzugsweise ca. 20-50 mm Polyurethan Hart- oder Hartintegralschaum).

Als Konstruktionselement ist die Dach- oder Fassadenplatte zusätzlich an der Innenseite der Tragschicht 1, also an der der Oberflächenschicht 2 gegenüberliegenden, vorzugsweise mit der Unterschicht bzw. Innenschicht 4 verschäumt. Die Unterschicht 4 ist dabei vorteilhafterweise als brandhemmende Calciumsulfatplatte ausgebildet und hat ferner vorzugsweise eine Dicke von ca. 25-45 mm. Die Unterschicht 4 hat vorzugsweise eine glatte Oberfläche und kann tapezierfähig sein, wodurch sie sich besonders als Innenwand bzw. Innendecke eignet.

Je nach der Funktion des Dach- oder Fassadenelementes, also ob das Dach- oder Fassadenelement als hinterlüftetes Dach- oder Fassadenelement auf ein bestehendes Dach bzw. an eine bestehende Außenwand eingehängt werden soll oder aber ob es als Konstruktionselement verwendet werden soll, ist auch die Größe des Dach- oder Fassadenelementes bzw. Konstruktionselementes unterschiedlich. Ein Konstruktionselement hat vorzugsweise eine Größe von ca. 2-3m x 1,5m, wohingegen ein Dach- oder Fassadenelement zur Verwendung als hinterlüftetes Dach- oder Fassadenelement vorzugsweise wesentlich kleiner gefertigt ist, beispielsweise im Bereich von 120cm x 60cm oder 120cm x 120cm. Es ist bei dem Verfahren auch auf besonders einfache Art und Weise möglich mehrere Oberflächenplatten, also Solarpanele zu einem größeren Dach- oder Fassadenelement zusammenzuschäumen, wodurch zusätzlicher Montageaufwand durch Ausrichtung der Oberflächenplatten auf dem Dach bzw. an der Fassade vermieden werden kann. Da zudem die gesamte Unterkonstruktion eingespart werden kann, verringert sich der Montageaufwand somit um ein vielfaches des herkömmlichen Montageaufwandes für Dächer oder Fassaden.

Ferner steigert sich die Stabilität der Dach- oder Fassadenplatten, je dicker die Tragschicht 1 gebildet ist. Somit ist es möglich, bei steigernder Dicke der Platten die Dachsparren mit größerem Abstand zueinander anzubringen und somit auch Kosten bei dem Hausbau selbst einzusparen. Diese Platten sind dann auch insbesondere für größere Hallen, wie beispielsweise Werks- oder Fabrikhallen, geeignet. Durch eine dicke Tragschicht 1 können zudem sämtliche Befestigungsteile, wie beispielsweise Schrauben oder andere Verankerungen, mit ausreichender Festigkeit in diese Dach- bzw. Fassadenkonstruktion montiert werden.

Das Konstruktionselement wird vorzugsweise direkt an Strukturelementen 5 eines Gebäudes, also beispielsweise den Dachlatten bzw. Trägern oder Stahlbetonsäulen einer statischen Baukonstruktion befestigt. Dazu kann jeweils ein Rücksprung 6 vorgesehen sein. Die Befestigung erfolgt beispielsweise mittels eines Metallwinkels 7, der mit den Strukturelementen 5 verbunden wird. Hierbei sind alle denkbaren Montagearten wie beispielsweise Schweiß-, Schraub-, Kleb- oder Hänge-Befestigungen möglich. Die Gesamtdicke des Konstruktionselementes ist beispielsweise 35 cm (8 cm Calciumsulfatplatte 3, 1 cm Oberflächenplatte 2, also das Solarpanel 3 sowie 26 cm Polyurethan Hart- oder Hartintegralschaum-Schicht 1), wobei die Dicke der jeweiligen Schichten je nach Anwendungsgebiet und verwendeten Materialen variieren kann. Im Vergleich zu einem Dach bzw. einer Fassade mit nachträglich aufgebrachtem Solarpanel ist die erfindungsgemäße Platte dennoch sehr dünn und leicht, wodurch eine hohe Gewichtsersparnis gegenüber einem herkömmlichen Dach bzw. Fassade erreicht werden kann, was insgesamt wiederum eine einfaches und gutes Handling dieser Platten zur Folge hat.

Bei mit einer Kühlung versehenen erfindungsgemäßen Dach- oder Fassadenplatten ist es möglich, diese aufgrund ihrer geringeren Ausdehnung dichter aneinander zu montieren und somit die Dehnungsfugen zu verkleinern. Aufgrund der geringeren Ausdehnung wird auch der Verschleiß der Dach- oder Fassadenplatten reduziert, wodurch wiederum deren Lebensdauer erhöht wird.

Nach dem Verlegen der Dach- oder Fassadenplatten ist es vorzugsweise vorgesehen, die Fugen zwischen den Platten mit üblichem Montageschaum oder ähnlichen geeigneten Materialien auszuschäumen. Auf diese Weise wird auch zwischen den Platten jegliches Eindringen beispielsweise von Regenwasser verhindert. Gerade, wenn die Dach- oder Fassadenplatten aufgrund der erfindungsgemäßen Kühlungsanordnung näher beieinander montiert werden können, kann, aufgrund der schmaleren Dehnungsfugen, auf diese Weise ferner Montageschaum eingespart werden.

Die Dach- oder Fassadenplatten bilden, insbesondere auch im montierten Zustand, eine besonders ebene Oberfläche über alle Platten eines Verbundes hinweg und bieten somit eine deutlich geringere Angriffsfläche, beispielsweise gegenüber Wind, als etwa Ziegel oder ähnliche gedeckte Dächer oder auch nachträglich an Dach oder Fassade angebrachte Solarpanele. Die Wahrscheinlichkeit einer Beschädigung der Dach- oder Fassadenkonstruktion, beispielsweise bei/durch Sturm, ist somit deutlich verringert.

Auf der Oberfläche der Solarzellen kann ferner, beispielsweise mittels eines besonderen Schliffs des Glases oder durch Verwendung von Farbstoffsolarzellen, eine Vielzahl optischer Wirkungen bei den Dach- oder Fassadenplatten erzielt werden. Farbstoffsolarzellen nutzen einen organischen Farbstoff für die Umwandlung von Licht in elektrische Energie wobei durch unterschiedliche Farbgebungen und Transparenzgrade unterschiedliche Gestaltungsmöglichkeiten ermöglicht werden. Mittels des zuvor genannten Schliffs des Glases oder auch der Farbstoffe kann somit beispielsweise eine Dach- oder Fassadenattrappe (bspw. Ziegeldach- oder Schieferdacheffekt) erzielt werden. Dies kann besonders dann vorteilhaft sein, wenn beispielsweise trotz baulicher Vorgaben (bspw. aufgrund Denkmalschutzes) ein bestimmter Dachaufbau bzw. Fassadenstruktur gefordert ist, dennoch nicht auf Solarenergie verzichtet werden soll. Es ist mit denselben Maßnahmen auch möglich, die Solarpanele derart abzublenden, dass eine Störung der Umgebung aufgrund sich spiegelnden Sonnenlichts vermieden werden kann.

Die Erfindung beschränkt sich nicht auf die oben genannten Einschränkungen. Jegliche Arten von aufschäumbaren Materialien für die Tragschicht sowie alle als Unterschicht geeigneten Materialien sind denkbar. Auch können alle denkbaren Bauteile oder Elemente in besagte Tragschicht mit eingeschäumt werden. Ferner können die Platten an allen Teilen und Bereichen eines Gebäudes angebracht werden.

### Bezugszeichenliste

- (1): Tragschicht
- (2): Oberflächenschicht
- (3): Solarpanel
- (4): Unterschicht
- (5): Strukturelement eines Gebäudes
- (6): Rücksprung
- (7): Metallwinkel
- (8): Kühl(mittel)schlangen
- (9): Wärmeleitplatte
- (10): Wärmetauscher
- (11): Kühlmedienkreislauf
- (11'): Nutzkreislauf
- (12): Heizung

## Patentansprüche

1. Dach- oder Fassadenplatte mit mindestens einer Oberflächenplatte (2), welche an Gebäuden befestigbar ist, wobei die Oberflächenplatte (2) mit einer Tragschicht (1) aus aufgeschäumtem Kunststoff direkt verschäumt ist, wobei die Oberflächenplatte (2) ein Solarpanel (3) aufweist,
**dadurch gekennzeichnet, dass**
in der Tragschicht (1) ein Metallgitter (8) eingeschäumt ist.

2. Dach- oder Fassadenplatte nach Anspruch 1,
**dadurch gekennzeichnet, dass**
die Tragschicht (1) an ihrer der Oberflächenplatte (2) gegenüberliegenden Seite mit einer Unterschicht (4) verschäumt ist.

3. Dach- oder Fassadenplatte nach Anspruch 2,
**dadurch gekennzeichnet, dass**
die Unterschicht (4) aus Calciumsulfat oder einem anderen, brandhemmenden Material gebildet ist.

4. Dach- oder Fassadenplatte nach einem der vorhergehenden Ansprüche,
**dadurch gekennzeichnet, dass**
die Tragschicht (1) aufgeschäumter Polyurethan Hart- bzw. Hartintegralschaum ist.

5. Dach- oder Fassadenplatte nach einem der vorhergehenden Ansprüche,
**dadurch gekennzeichnet, dass**
in der Tragschicht (1) Aufhängungs- bzw. Montagemittel zum Befestigen der Dach-oder Fassadenplatte am Gebäude eingeschäumt sind.

6. Dach- oder Fassadenplatte nach einem der vorhergehenden Ansprüche,
**dadurch gekennzeichnet, dass**
in der Tragschicht (1) Nut/Federelemente eingeschäumt ist.

7. Dach- oder Fassadenplatte nach einem der vorhergehenden Ansprüche,
**dadurch gekennzeichnet, dass**
in der Tragschicht (1) Rohre eingeschäumt sind.

8. Dach- oder Fassadenplatte nach Anspruch 7,
**dadurch gekennzeichnet, dass**
die Rohre mit dem Rohrsystem der Fußbodenheizung entweder direkt oder indirekt über Wärmetauscher verbunden sind.

9. Dach- oder Fassadenplatte nach Anspruch 7,
**dadurch gekennzeichnet, dass**
die Rohre mit dem Rohrsystem der Warmwasseraufbereitung entweder direkt oder indirekt über Wärmetauscher verbunden ist.

10. Dach- oder Fassadenplatte nach einem der Ansprüche 7 bis 9,
**dadurch gekennzeichnet, dass**
die Rohre Kühlschlangen aufweisen.

11. Dach- oder Fassadenplatte nach einem der vorhergehenden Ansprüche,
**dadurch gekennzeichnet, dass**
in der Tragschicht (1) elektronische Bauteile mit eingeschäumt sind.

12. Verfahren zur Herstellung einer Dach- oder Fassadenplatte nach einem der Ansprüche 1 bis 11,
**dadurch gekennzeichnet, dass**
eine Oberflächenplatte (2), aufweisend ein Solarpanel (3), in eine Form eingebracht wird und anschließend mindestens zwei flüssige Komponenten, vorzugsweise Polyol und Isocyanat, in die Form eingespritzt werden, welche bei Kontakt zu Hart- oder Hart-Integralschaum aufschäumen, der eine Tragschicht (1) bildet,
wobei in die Tragschicht (1) ein Metallgitter (8) eingeschäumt wird.

13. Verfahren nach Anspruch 12,
**dadurch gekennzeichnet, dass**
zusammengehörende, für dasselbe Gebäude produzierte Dach- oder Fassadenplatten stets in die gleiche bzw. eine identische Form eingebracht werden und dabei die Dicke der Form, unabhängig von der Dicke des Solarpanels (3), stets konstant gehalten wird.

14. Konstruktionselement aus einer Dach- oder Fassadenplatte gemäß einem der Ansprüche 1 bis 11,
**dadurch gekennzeichnet, dass**
das Konstruktionselement direkt an Strukturelementen (5) eines Gebäudes befestigt ist.

15. Konstruktionselement nach Anspruch 14,
**dadurch gekennzeichnet, dass**
das Konstruktionselement einen Rücksprung (6) aufweist, der an zwei benachbarten Seiten der Strukturelemente (5) befestigbar ist.

16. Konstruktionselement nach Anspruch 15,
**dadurch gekennzeichnet, dass**
der Rücksprung (6) mit einem Metallwinkel (7) ausgekleidet ist.

17. Konstruktionsfassadenelement nach einem der Ansprüche 14 bis 16,
**dadurch gekennzeichnet, dass**
die Strukturelemente Träger oder Dachlatten (5) des Gebäudes umfassen.

18. Konstruktionsfassadenelement nach einem der Ansprüche 14 bis 17,
**dadurch gekennzeichnet, dass**
an jeder Seite mit Ausnahme der Vorderseite eine Calciumsulfatplatte angeordnet ist.

## Claims

1. Roof panel or facade panel with at least one surface panel (2), which can be fastened on buildings, wherein the surface panel (2) is foamed directly with a carrying layer (1) made of expanded plastics material, wherein the surface panel (2) has a solar panel (3),
**characterized in that**
a metal grid (8) is incorporated in the carrying layer (1) by foaming.

2. Roof panel or facade panel according to Claim 1,
**characterized in that**
the carrying layer (1), on its side which is located opposite the surface panel (2), is foamed with a lower layer (4).

3. Roof panel or facade panel according to Claim 2,
**characterized in that**
the lower layer (4) is formed from calcium sulphate or some other, fire-retardant material.

4. Roof panel or facade panel according to one of the preceding claims,
**characterized in that**
the carrying layer (1) is expanded rigid polyurethane foam or rigid integral foam.

5. Roof panel or facade panel according to one of the preceding claims,
**characterized in that**
suspension or mounting means for fastening the roof panel or facade panel on the building are incorporated in the carrying layer (1) by foaming.

6. Roof panel or facade panel according to one of the preceding claims,
**characterized in that**
groove/tongue elements are incorporated in the carrying layer (1) by foaming.

7. Roof panel or facade panel according to one of the preceding claims,
**characterized in that**
pipes are incorporated in the carrying layer (1) by foaming.

8. Roof panel or facade panel according to Claim 7,
**characterized in that**
the pipes are connected to the pipe system of the floor-heating installation either directly or indirectly via heat exchangers.

9. Roof panel or facade panel according to Claim 7,
**characterized in that**
the pipes are connected to the pipe system of the means for preparing hot water either directly or indirectly via heat exchangers.

10. Roof panel or facade panel according to one of Claims 7 to 9,
**characterized in that**
the pipes have cooling coils.

11. Roof panel or facade panel according to one of the preceding claims,
**characterized in that**
electronic components are also incorporated in the carrying layer (1) by foaming.

12. Method of producing a roof panel or facade panel according to one of Claims 1 to 11,
**characterized in that**
a surface panel (2), having a solar panel (3), is introduced into a mould, and then at least two liquid components, preferably polyol and isocyanate, are injected into the mould, and expand on contact to give rigid foam or rigid integral foam, which forms a carrying layer (1),
wherein a metal grid (8) is incorporated in the carrying layer (1) by foaming.

13. Method according to Claim 12,
**characterized in that**
roof panels or facade panels which belong together, and are produced for the same building, are always introduced into the same, or an identical, mould, and the thickness of the mould, irrespective of the thickness of the solar panel (3), is always kept constant.

14. Construction element made up of a roof panel or facade panel according to one of Claims 1 to 11,
**characterized in that**
the construction element is fastened directly on structural elements (5) of a building.

15. Construction element according to Claim 14,
**characterized in that**
the construction element has a set-back portion (6), which can be fastened on two adjacent sides of the structural elements (5).

16. Construction element according to Claim 15,
**characterized in that**
the set-back portion (6) is lined with an angled metal element (7).

17. Facade construction element according to one of Claims 14 to 16,
**characterized in that**
the structural elements comprise beams or roof battens (5) of the building.

18. Facade construction element according to one of Claims 14 to 17,
**characterized in that**
a calcium-sulphate panel is arranged on each side, with the exception of the front side.

## Revendications

1. Panneau de toit ou de façade pourvu d'au moins un panneau de surface (2), qui est susceptible d'être fixé à des bâtiments, dans lequel le panneau de surface (2) est directement expansé avec une couche de support (1) en plastique expansé, dans lequel le panneau de surface (2) présente un panneau solaire (3),
**caractérisé en ce que**
une grille métallique (8) est intégrée par moussage dans la couche de support (1).

2. Panneau de toit ou de façade selon la revendication 1,
**caractérisé en ce que**
la couche de support (1) est moussée, sur son côté opposé au panneau de surface (2), avec une couche inférieure (4).

3. Panneau de toit ou de façade selon la revendication 2,
**caractérisé en ce que**
la couche inférieure (4) est formée de sulfate de calcium ou d'un autre matériau ignifuge.

4. Panneau de toit ou de façade selon l'une des revendications précédentes,
**caractérisé en ce que**
la couche de support (1) est une mousse dure de polyuréthane expansée ou une mousse intégrale dure de polyuréthane expansée.

5. Panneau de toit ou de façade selon l'une des revendications précédentes,
**caractérisé en ce que**
des moyens d'accrochage ou des moyens de montage destinés à fixer le panneau de toit ou de façade sur le bâtiment sont intégrés par moussage dans la couche de support (1).

6. Panneau de toit ou de façade selon l'une des revendications précédentes,
**caractérisé en ce que**
des éléments de rainure et languette sont intégrés par moussage dans la couche de support (1).

7. Panneau de toit ou de façade selon l'une des revendications précédentes,
**caractérisé en ce que**
des tuyaux sont intégrés par moussage dans la couche de support (1).

8. Panneau de toit ou de façade selon la revendication 7,
**caractérisé en ce que**
les tuyaux sont raccordés avec le système de tuyaux du chauffage par le sol soit directement soit indirectement par l'intermédiaire d'un échangeur de chaleur.

9. Panneau de toit ou de façade selon la revendication 7,
**caractérisé en ce que**
les tuyaux sont raccordés avec le système de tuyaux du système de préparation d'eau chaude soit directement soit indirectement par l'intermédiaire d'un échangeur de chaleur.

10. Panneau de toit ou de façade selon l'une des revendications 7 à 9,
**caractérisé en ce que**
les tuyaux présentent des serpentins de refroidissement.

11. Panneau de toit ou de façade selon l'une des revendications précédentes,
**caractérisé en ce que**
des composants électroniques sont intégrés par moussage dans la couche de support (1).

12. Procédé pour la fabrication d'un panneau de toit ou de façade selon l'une des revendications 1 à 11,
**caractérisé en ce que**
un panneau de surface (2), présentant un panneau solaire (3), est inséré dans un moule puis au moins deux composants liquides, de préférence polyol et isocyanate, sont injectés dans le moule, lesquels sont expansés au contact en mousse dure ou en mousse intégrale, laquelle mousse forme une couche de support (1),
une grille métallique (8) étant intégrée par moussage dans la couche de support (1).

13. Procédé selon la revendication 12,
**caractérisé en ce que**
des panneaux de toit ou de façade faits pour être ensemble et produits pour le même bâtiment sont toujours insérés dans le même moule ou dans un moule identique, cependant que l'épaisseur du moule est toujours maintenue constante indépendamment de l'épaisseur du panneau solaire (3).

14. Élément de construction fait à partir d'un panneau de toit ou de façade selon l'une des revendications 1 à 11,
**caractérisé en ce que**
l'élément de construction est fixé directement à des éléments de structure (5) d'un bâtiment.

15. Élément de construction selon la revendication 14,
**caractérisé en ce que**
l'élément de construction présente un évidement (6), qui est susceptible d'être fixé à deux côtés adjacents des éléments de structure (5).

16. Élément de construction selon la revendication 15,
**caractérisé en ce que**
l'évidement (6) est recouvert d'une pièce d'angle (7) en métal.

17. Élément de construction selon l'une des revendications 14 à 16,
**caractérisé en ce que**
les éléments de structure comprennent des poutres ou des lattes de toit (5) du bâtiment.

18. Élément de construction selon l'une des revendications 14 à 17,
**caractérisé en ce que**
une panneau de sulfate de calcium est agencé sur chaque côté à l'exception du côté avant.
